# EUROPEAN PATENT SPECIFICATION

(11) **EP 2 860 063 B1**
(45) Date of publication and mention of the grant of the patent: **14.02.2018**
(21) Application number: 13199653.0
(22) Date of filing: 27.12.2013
(51) Int. Cl.: B60R 1/00

(54) **Method and apparatus for acquiring image for vehicle**
Verfahren und Vorrichtung zur Erfassung eines Bildes für Fahrzeug
Procédé et appareil d'acquisition d'image pour véhicule

(30) Priority: 08.10.2013 KR 20130119730
(43) Date of publication of application: 15.04.2015
(73) Proprietor: HYUNDAI MOTOR COMPANY, Seoul 137-938 (KR)
(72) Inventor: An, Jun Sik, 463-916 Gyeonggi-do (KR); Lee, Joong Ryoul, 445-731 Gyeonggi-do (KR); Sung, Kap Je, 445-020 Gyeonggi-do (KR); Chang, Eu Gene, 435-710 Gyeonggi-do (KR)
(74) Representative: Isarpatent

(56) References cited:
- EP-A1- 1 383 332
- EP-A1- 1 513 101
- EP-A1- 2 285 109
- EP-A1- 2 555 519
- EP-A1- 2 583 868
- WO-A1-2009/044654
- US-A1- 2005 012 685
- US-A1- 2009 143 967
- US-A1- 2010 066 516
- US-A1- 2012 229 645
- US-B1- 7 161 616

## Description

### BACKGROUND

### Field of the invention

The present invention relates to a method and an apparatus that acquires an image for a vehicle, and more particularly, to an apparatus that acquires an image for a vehicle and provides an around view monitoring (AVM) system of the vehicle an image for a user interface to rapidly select a position around the vehicle on which image data is confirmed by a driver and provides image data in which a blind spot around the vehicle is minimized to the driver.

### Description of the Prior Art

An around view monitoring (AVM) system is a system that confirms image data around a vehicle from a driver's seat of the vehicle. Recently, AVM systems have been mounted within the vehicle to assist in driving the vehicle and allow the driver to recognize a situation (e.g., an obstacle) around the vehicle while parking the vehicle more easily. US 2012/229645 A1 discloses an in-vehicle illuminating apparatus, an image processing apparatus and an image display system.

However, since AVM systems generally include about four imaging devices disposed at a front, a rear, a left, and a right of the vehicle and provide image data acquired from the imaging devices to the driver, it may be difficult for a driver to appropriately confirm an environment outside the vehicle and the driver may not confirm a blind spot around the vehicle, thus increasing the risk of an unexpected accident while parking the vehicle.

### SUMMARY

The present invention provides an apparatus according to claim 1, a method according to claim 6 and a non-transitory computer readable medium according to claim 11.

Accordingly, the present invention provides a method and an apparatus for acquiring an image for a vehicle, which may be an around view monitoring (AVM) system that may include a user interface that may rapidly select a position around the vehicle on which image data may be confirmed. In addition, the present invention provides an apparatus for acquiring an image for a vehicle that may minimize a blind spot around the vehicle and minimize distortion of image data when image data around the vehicle is provided to a driver. Further, the present invention provides an apparatus for acquiring an image for a vehicle that may provide image data to a driver when a state of the vehicle and an environment around the vehicle are considered.

In one aspect of the present invention, an apparatus for acquiring an image for a vehicle includes: an input configured to receive an input from the exterior; at least one imaging device configured to acquire an external image data of the vehicle; a sensor including at least one sensor configured to confirm a state of the vehicle; a display configured to display a region around the vehicle to be divided into a plurality of regions based on the vehicle; and a controller configured to select a virtual projection model based on a selected region or a state change of the vehicle when at least one of the plurality of regions is selected from the input or the state change of the vehicle is sensed by the sensor, and project the external image data onto the virtual projection model, to generate final image data for a position of the selected region.

The plurality of regions include regions for confirming a front, a rear, a left front, a left rear, a right front, a right rear, and an upper portion of the vehicle and regions for confirming the front and the rear of the vehicle. The virtual projection model may include a plane model, a spherical model, a hybrid model, a cylindrical model, a three-section model, and a variable tilting model. The controller may be configured to generate a virtual imaging device model around the vehicle when the virtual projection model is selected. In addition, the controller may be configured to adjust a position, an angle, a focal length, and a distortion degree of the virtual imaging device model based on the selected region or the state change of the vehicle when at least one of the plurality of regions is selected from the input or the state change of the vehicle is sensed by the sensor. The virtual imaging device model, operated by the controller, may be configured to photograph the external image data projected on the virtual projection model to generate the final image data.

### BRIEF DESCRIPTION OF THE DRAWINGS

The above and other objects, features and advantages of the present invention will be more apparent from the following detailed description taken in conjunction with the accompanying drawings, in which:
FIG. 1 is an exemplary block diagram illustrating main components of an apparatus for acquiring an image for a vehicle according to an exemplary embodiment of the present invention; and
FIGS. 2 to 12 are exemplary diagrams for describing operations of the apparatus for acquiring an image for a vehicle according to the exemplary embodiment of the present invention.

### DETAILED DESCRIPTION

It is understood that the term "vehicle" or "vehicular" or other similar term as used herein is inclusive of motor vehicles in general such as passenger automobiles including sports utility vehicles (SUV), buses, trucks, various commercial vehicles, watercraft including a variety of boats and ships, aircraft, and the like, and includes hybrid vehicles, electric vehicles, combustion, plug-in hybrid electric vehicles, hydrogen-powered vehicles and other alternative fuel vehicles (e.g. fuels derived from resources other than petroleum).

Although exemplary embodiment is described as using a plurality of units to perform the exemplary process, it is understood that the exemplary processes may also be performed by one or plurality of modules. Additionally, it is understood that the term controller/control unit refers to a hardware device that includes a memory and a processor. The memory is configured to store the modules and the processor is specifically configured to execute said modules to perform one or more processes which are described further below.

Furthermore, control logic of the present invention may be embodied as non-transitory computer readable media on a computer readable medium containing executable program instructions executed by a processor, controller/control unit or the like. Examples of the computer readable mediums include, but are not limited to, ROM, RAM, compact disc (CD)-ROMs, magnetic tapes, floppy disks, flash drives, smart cards and optical data storage devices. The computer readable recording medium can also be distributed in network coupled computer systems so that the computer readable media is stored and executed in a distributed fashion, e.g., by a telematics server or a Controller Area Network (CAN).

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof As used herein, the term "and/or" includes any and all combinations of one or more of the associated listed items.

Unless specifically stated or obvious from context, as used herein, the term "about" is understood as within a range of normal tolerance in the art, for example within 2 standard deviations of the mean. "About" can be understood as within 10%, 9%, 8%, 7%, 6%, 5%, 4%, 3%, 2%, 1%, 0.5%, 0.1%, 0.05%, or 0.01% of the stated value. Unless otherwise clear from the context, all numerical values provided herein are modified by the term "about."

Hereinafter, exemplary embodiments of the present invention will be described in more detail with reference to the accompanying drawings. In describing the exemplary embodiments of the present invention, a description of technical contents that are well-known in the art to which the present invention pertains and are not directly related to the present invention will be omitted if possible. The reason why an unnecessary description is omitted is to make the purpose of the present invention clear.

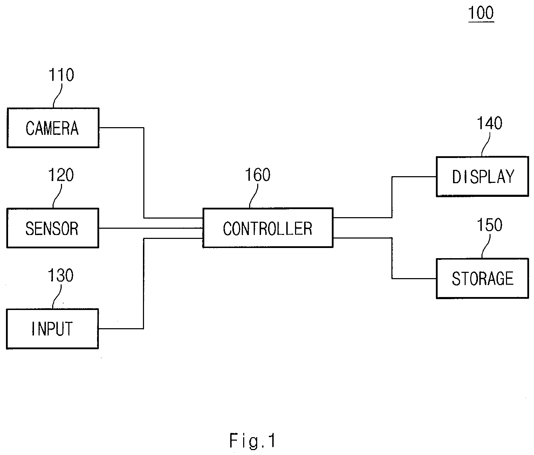

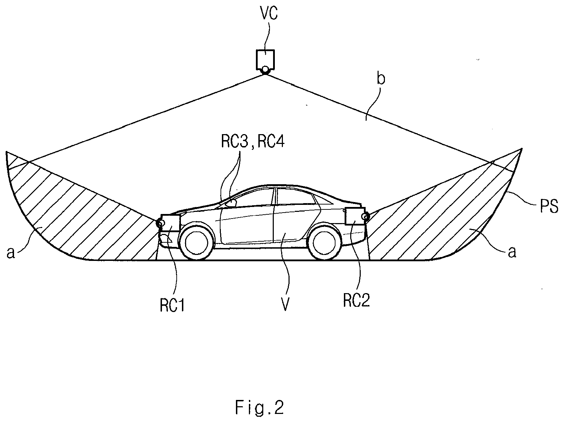

FIG. 1 is an exemplary block diagram illustrating main components of an apparatus for acquiring an image for a vehicle according to an exemplary embodiment of the present invention. FIGS. 2 to 12 are exemplary diagrams for describing operations of the apparatus for acquiring an image for a vehicle according to the exemplary embodiment of the present invention. Referring to FIGS. 1 to 12, the apparatus 100 (hereinafter, referred to as an image acquiring apparatus 100) configured to acquire an image for a vehicle includes imaging devices 110 (e.g., cameras, video cameras, and the like), a sensor 120, an input 130, a display 140, a storage 150, and a controller 160.

The imaging devices 110 may be installed at a front, a rear, a left, and a right of the vehicle, respectively, and is configured to acquire external image data around the vehicle, and provide the acquired image data to the controller 160. In particular, the number of installed imaging devices 110 may be changed by those skilled in the art. The sensor 120 includes at least one sensor configured to sense a state change of the vehicle such as a gear change of the vehicle, a vehicle speed change, an angle change of a steering wheel, an operation change of a door of the vehicle, and the like. The input 130 is configured to transfer an input signal, setting of various functions, and a key signal input in relation to a function control of the image acquiring apparatus 100 from a user to the controller 160. The input 130 may be formed of an input device that may include a multi-input and a gesture based on a form of the image acquiring apparatus 100. Additionally, the input 130 may include a touch screen and may be included in the display 140. In the exemplary embodiment of the present invention, the input unit 130 may be formed of a touch pad or a touch screen to improve user convenience.

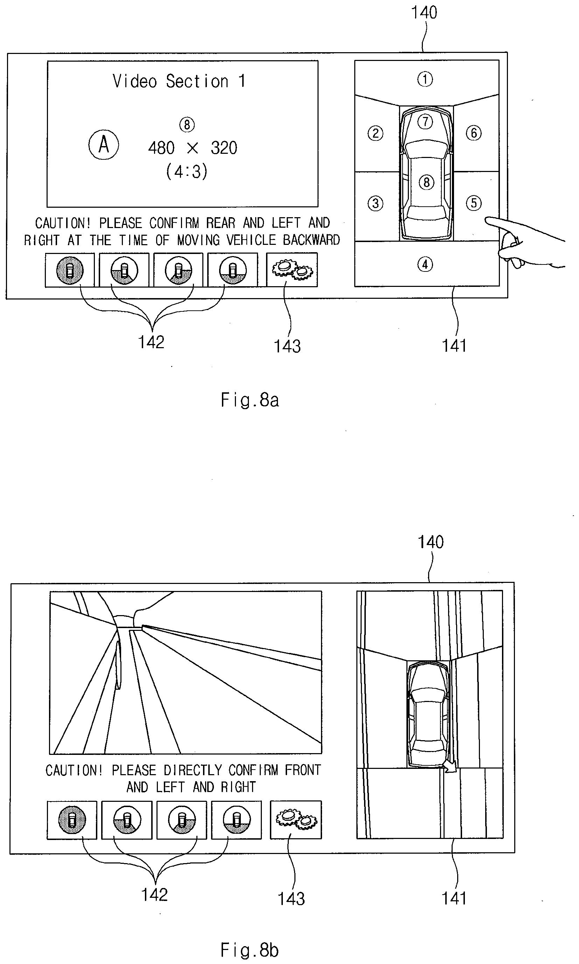

The display unit 140 is configured to display screen data, for example, various menu data, digital broadcasting screen data, external image data around the vehicle, generated during execution of a program under a control of the controller 160, and display screen data 141 in which a region around the vehicle is displayed to be divided into a plurality of regions, vehicle icons 142, and the like, as illustrated in FIGS. 8A to 11B. In particular, the user may not directly select a region to be confirmed, such as a reference numeral 141, but may select the vehicle icons 142, thereby selecting a preset region.

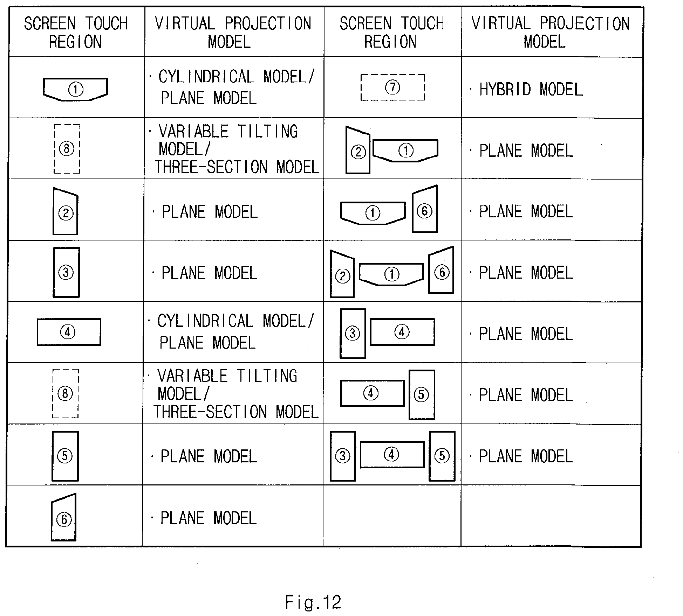

The storage 150 may be configured to store application programs (e.g., programs that generate a virtual projection model and a virtual imaging device model) required for function operations according to the exemplary embodiment of the present invention. In addition, the storage 150 may be configured to store a region selected from the screen data 141 in which the region around the vehicle is displayed to be divided into the plurality of regions and a virtual projection model in a mapping table form in which the selected region and the virtual projection model are mapped to each other as illustrated in FIG. 12.

When a selection signal for at least one of the plurality of regions around the vehicle is input or a signal for a state change of the vehicle is input via the sensor 120 from the input 130, the controller 160 is configured to select the virtual projection model based on the selected region or the stage change of the vehicle. The controller 160 is configured to project the external image data acquired from the imaging devices 110 onto the selected virtual projection model to generate final image data appropriate for a position of the selected region and output the generated final image data via the display 140.

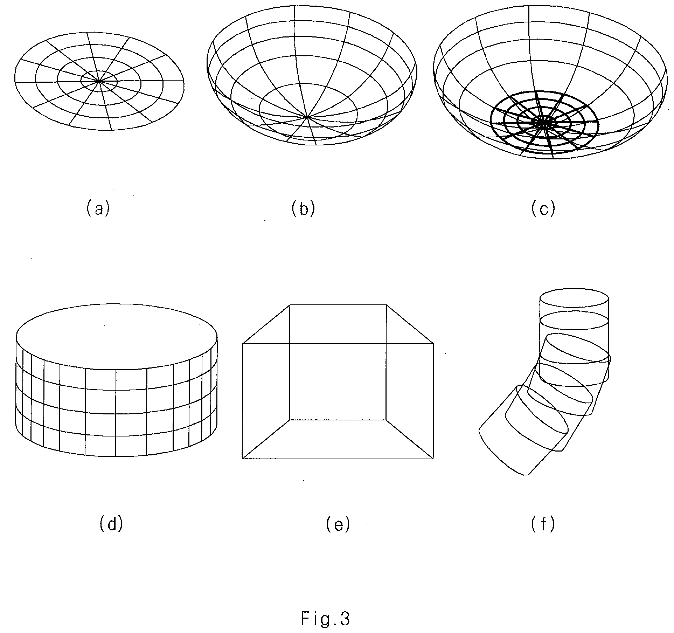

A detailed description will be provided with reference to FIGS. 2 to 12. When a signal for confirming the region around the vehicle is input or the state change of the vehicle V is sensed by the sensor 120, the controller 160 is configured to select any one of a plurality of virtual projection models based on the selected region or a position based on the state change of the vehicle V. The virtual projection model may include a plane model as illustrated in FIG. 3A, a spherical model as illustrated in FIG. 3B, a hybrid model as illustrated in FIG. 3C, a cylindrical model as illustrated in FIG. 3D, a three-section model as illustrated in FIG. 3E, a variable tilting model as illustrated in FIG. 3F, and the like. The controller 160 is configured to select the virtual projection model in the mapping table stored in the storage 150, randomly select the virtual projection model by a separate program, or select the virtual projection model by a user input. In particular, the controller 160 is configured to receive signals for adjusting parameters including a position, an angle, a focal length, and a distortion degree of a virtual imaging device model VC (hereinafter, referred to as a virtual imaging device) from the input 130 to set the respective parameter values or set the respective parameter values based on the state change of the vehicle V sensed by the sensor 120.

When the virtual projection model is selected based on the vehicle V as illustrated in FIG. 2, the controller 160 is configured to generate a virtual imaging device model around the vehicle V based on imaging devices RC1, RC2, RC3, and RC4 installed within the vehicle V. In particular, regions that correspond to a reference sign a represent regions of image data acquired by RC1 and RC2, and a region that correspond to a reference sign b represents a region of image data photographed by a virtual imaging device VC (e.g., a virtual camera). In addition, regions of image data acquired from RC3 and RC4 represent regions that correspond to both sides of the vehicle. The controller 160 is configured to project the external image data photographed by the imaging devices RC1, RC2, RC3, and RC4 onto a projection surface PS of the virtual projection model and operate the VC to photograph the external image data projected onto the projection surface PS, to acquire final image data.

In addition, although the controller 160 is configured to operate the VC to photograph the external image data projected onto the projection surface PS has been described, this does not mean that the image data are substantially photographed, but may be interpreted as meaning that image data included in the region b of the VC among the external image data projected onto the projection surface PS are captured. Further, a screen that acquires and displays the final image data from the external image data projected onto the projection surface PS of the virtual projection model selected by the controller 160 may be as follows.

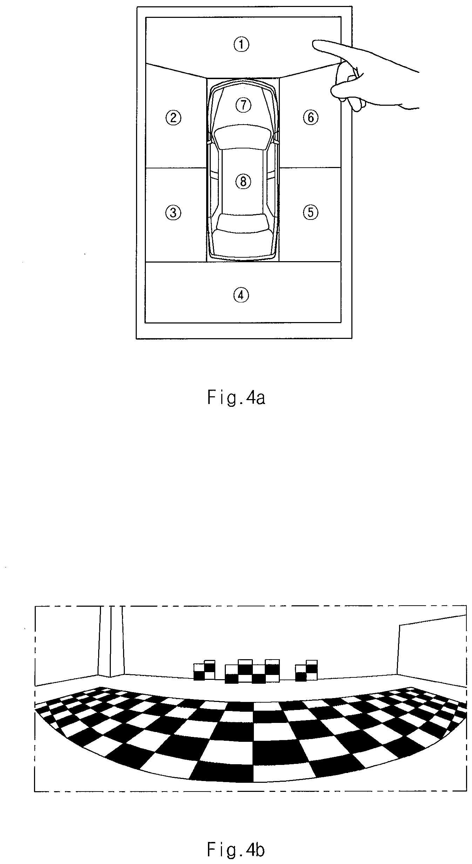

When the front ① (or the rear ④) of the vehicle is selected as illustrated in FIG. 4A, the controller 160 is configured to select a plane model or a cylindrical model as mapped in the mapping table of FIG. 12. FIG. 4B illustrates exemplary final image data acquired by selecting a cylindrical model, that is, a model of FIG. 3D, to show a vertical object such as an obstacle, or the like, to stand vertically (e.g.,. portrait view) without distortion of image data while showing image data in a panoramic form for a wide region having a horizontal angle of about 180 degrees to the driver.

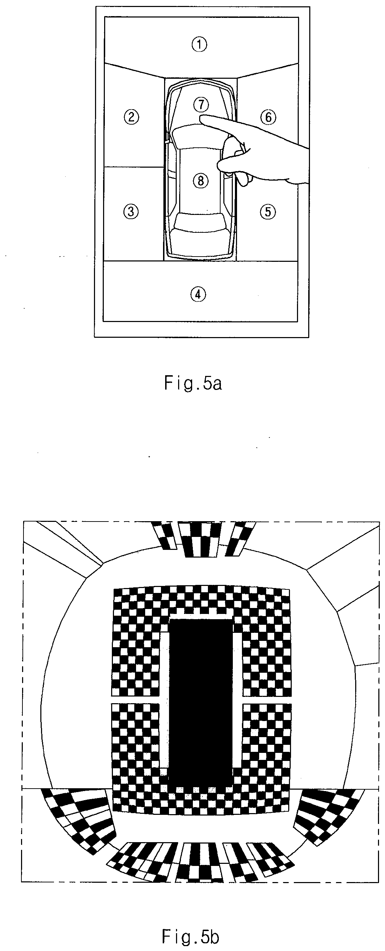

In addition, when a bumper portion ⑦ of the vehicle V is selected as illustrated in FIG. 5A, the controller 160 is configured to select a hybrid model as mapped in the mapping table of FIG. 12 to show final image data as illustrated in FIG. 5B to the driver. In particular, the hybrid model is a model designed to display image data of portions adjacent to the vehicle V as a plane, image data of portions other than the portions adjacent to the vehicle V that may be displayed as a sphere, and boundaries of the plane and the sphere may be connected to each other, creating a visual field of the driver wide. Although not illustrated, when at least one of sides ②, ③, ⑤, and ⑥ of the vehicle V is selected in FIG. 4A or 5A, the controller 160 is configured to select a plane model, which is a model of FIG. 3A, as mapped in the mapping table of FIG. 12 to show image data without distortion (e.g., minimal distortion) to the driver.

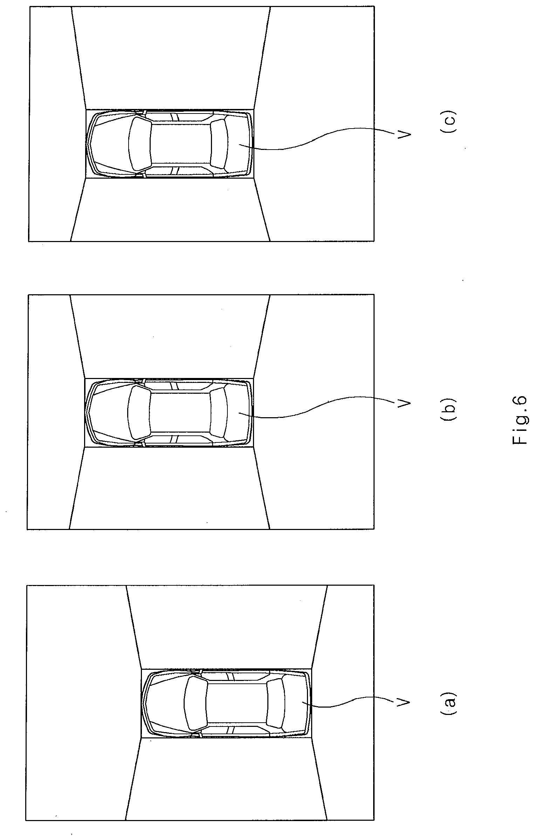

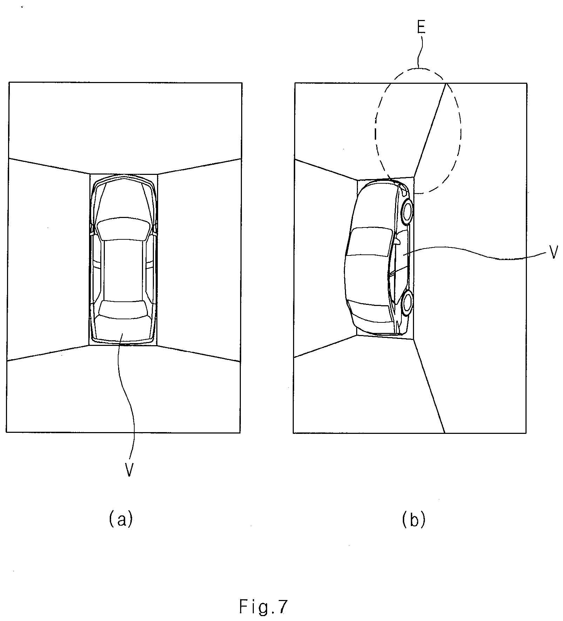

Furthermore, the controller 160 is configured to adjust a position of the VC based on the state change of the vehicle V, for example, a gear change, a vehicle speed change, an angle change of a steering wheel, an operation change of a door of the vehicle, and the like, as illustrated in FIGS. 6A to 7B. The controller 160 is configured to adjust a position of the VC as illustrated in FIG. 6A when the vehicle moves forward, adjust a position of the VC as illustrated in FIG. 6B when the vehicle moves backward, and adjust a position of the VC as illustrated in FIG. 6C when a steering wheel is rotated to the right during backward movement of the vehicle. When a signal for inclination of vehicle or external image data is input via a screen in which the vehicle and external image data are displayed as illustrated in FIG. 7A, the controller 160 is configured to display the vehicle or external image data in an inclined state as illustrated in FIG. 7B to adjust an angle of a boundary line of image data to allow the driver to confirm image data on the side of the vehicle V as illustrated in a reference numeral E. In particular, the virtual projection model is selected, changed, and applied based on a degree of inclination required by the driver.

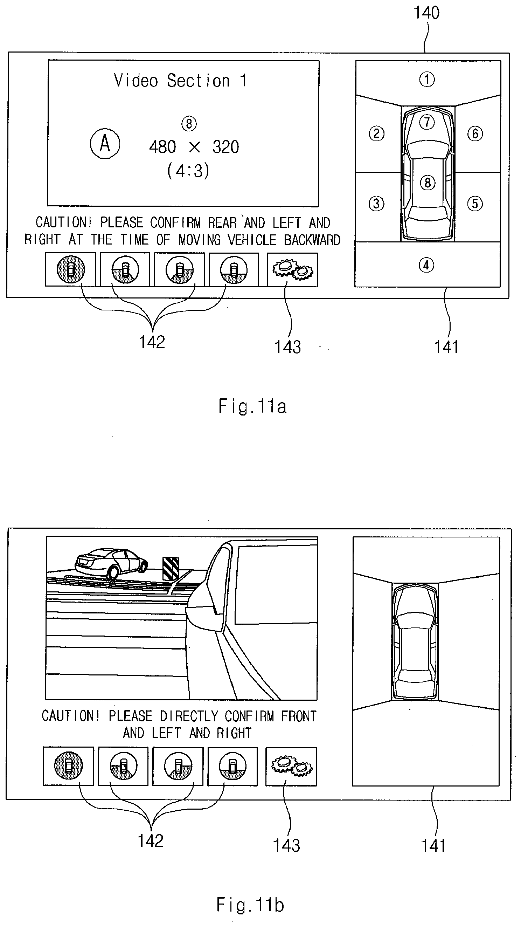

FIGS. 8A to 11B illustrate exemplary screens displayed on the display 140 according to the exemplary embodiment of the present invention. In FIGS. 8A to 11B, a reference numeral 141 indicates screen data in which a region around the vehicle is displayed to be divided into a plurality of regions, a reference numeral 142 indicates vehicle icons, and a reference numeral 143 indicates a setting icon for setting the vehicle icons. More specifically, when a selection signal for a region ⑤ in 141 is received from the driver as illustrated in FIG. 8A, the controller 160 is configured to recognize the received signal as a signal for confirming external image data on the side of the vehicle to select a plane model that provides image data without distortion among the virtual projection models. The controller 160 is configured to project the external image data acquired from the imaging devices mounted within the vehicle onto a projection surface of the plane model. In addition, the VC may be configured to photograph image data projected onto the projection surface to generate final image data and provide the generated final image data to the display 140 as illustrated in FIG. 8B.

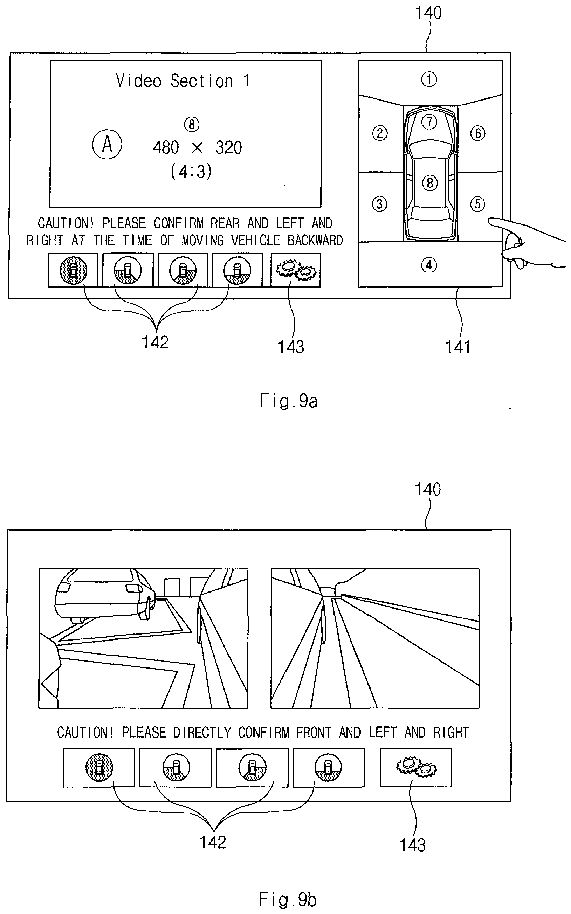

In addition, when a signal that senses that a door of the vehicle is opened is received from the sensor 120 after the selection signal for the region ⑤ in 141 is received as shown in FIG. 9A, the controller 160 is configured to determine whether the driver desires to confirm image data of a right rear region of the vehicle. The controller 160 is configured to select the plane model that may provide image data without distortion among the virtual projection models. The controller 160 is configured to project the external image data acquired from the imaging devices mounted within the vehicle onto a projection surface of the plane model. The VC is configured to photograph image data projected onto the projection surface to generate final image data and output the generated final image data via the display 140 as illustrated in FIG. 9B.

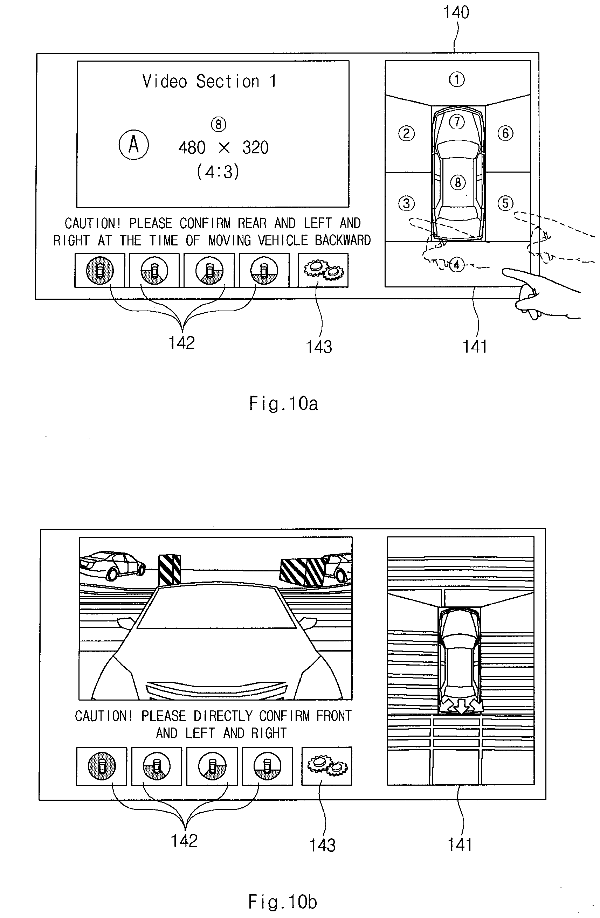

When a selection signal for regions ③, ④, and ⑤ in 141 is received from the driver as illustrated in FIG. 10A, the controller 160 is configured to determine whether the driver desires to confirm image data of left rear, right rear, and rear regions of the vehicle. The controller 160 is configured to select the plane model that may provide image data without distortion among the virtual projection models. The controller 160 is configured to project the external image data acquired from the imaging devices mounted within the vehicle onto a projection surface of the plane model. In addition, the VC may be configured to photograph image data projected onto the projection surface to generate final image data and output the generated final image data via the display 140 as illustrated in FIG. 10B.

Further, when a steering wheel turn signal of the vehicle is received from the sensor 120 after the selection signal for the regions ③, ④, and ⑤ in 141 is received from the driver as illustrated in FIG. 11A, the controller 160 is configured to adjust a position of the VC to correspond to the steering wheel turn signal and determine whether the driver is to rotate the vehicle. The controller 160 is configured to select the plane model that provides image data without distortion among the virtual projection models. The controller 160 is configured to project the external image data acquired from the imaging devices mounted within the vehicle onto a projection surface of the plane model. In addition, the VC is be configured to photograph image data projected onto the projection surface to generate final image data and output the generated final image data via the display 140 as illustrated in FIG. 11B.

As described above, according to the exemplary embodiment of the present invention, when the image data around the vehicle is provided to the driver, the image data is provided using various virtual projection models and virtual imaging device models, to minimize a blind spot around the vehicle, minimize distortion of the image data, output image data in which a state of the vehicle and an environment around the vehicle are considered, to allow the driver to drive the vehicle more stably.

In addition, an around view monitoring (AVM) system including a user interface that allows the driver to select at least one region in the reference numeral 141 or select any one of the vehicle icons 142 to rapidly select a position around the vehicle on which image data are to be confirmed as shown in FIGS. 8A to 11B is provided, thus increasing user convenience.

Although the exemplary embodiments of the present invention have been illustrated in the present specification and the accompanying drawings and specific terms have been used, they are used in a general meaning to assist in the understanding the present invention and do not limit the scope of the present invention. It will be obvious to those skilled in the art to which the present invention pertains that other modifications based on the scope of the present invention as defined in the claims may be made, in addition to the above-mentioned exemplary embodiments.

### SYMBOL OF EACH OF THE ELEMENTS IN THE FIGURES

110: CAMERA
120: SENSOR
130: INPUT
140: DISPLAY
150: STORAGE
160: CONTROLLER

## Claims

1. An apparatus (100) for acquiring an image for a vehicle (V) comprising:
an input (130) configured to receive a user input;
at least one imaging device (110, RC1-RC4) configured to acquire an external image data of the vehicle (V);
a sensor (120) including at least one sensor configured to confirm a state of the vehicle (V);
a display (140) configured to display a region around the vehicle (V) to be divided into a plurality of regions based on the vehicle (V); and
a controller (160) configured to select a virtual projection model based on a selected region or the state change of the vehicle (V) when at least one of the plurality of regions is selected from the user input or the state change of the vehicle (V) is sensed by the sensor (120), project the external image data onto a projection surface of the virtual projection model, and capture the external image data projected onto the projection surface using a virtual imaging device (VC) to generate final image data that corresponds to a position of the selected region,
wherein the controller (160) adjusts a position of the virtual imaging device (VC) according to the state change of the vehicle (V) to capture the external image data projected corresponding to the state change of the vehicle (V),
wherein the state change of the vehicle (V) includes a gear change, a vehicle speed change, an angle change of a steering wheel, or an operation change of a door, and
wherein the plurality of regions include regions for confirming a front, a rear, a left front, a left rear, a right front, a right rear, and an upper portion of the vehicle (V) and regions for confirming the front and the rear of the vehicle (V).

2. The apparatus (100) according to claim 1, wherein the virtual projection model includes a plane model, a spherical model, a hybrid model, a cylindrical model, a three-section model, and a variable tilting model.

3. The apparatus (100) according to claim 2, wherein the controller (160) is configured to generate a virtual imaging device (VC) model around the vehicle (V) when the virtual projection model is selected.

4. The apparatus (100) according to claim 3, wherein the controller (160) is configured to adjust a position, an angle, a focal length, and a distortion degree of the virtual imaging device (VC) model based on the selected region or the state change of the vehicle (V) when at least one of the plurality of regions is selected from the user input or the state change of the vehicle (V) is sensed by the sensor (120).

5. The apparatus (100) according to claim 3, wherein the virtual imaging device (VC) model is executed by the controller (160) to photograph the external image data projected on the virtual projection model to generate the final image data.

6. A method for acquiring an image for a vehicle (V), comprising:
receiving, by a controller (160), a user input;
receiving, by the controller (160), external image data of the vehicle (V) from at least one imaging device (110, RC1-RC4);
receiving, by the controller (160), confirmation of a state of the vehicle (V) from at least one sensor (120);
selecting, by the controller (160), a virtual projection model based on a selected region or the state change of the vehicle (V) when at least one of a plurality of regions is selected from the user input or the state change of the vehicle (V) is sensed by the sensor (120);
projecting, by the controller (160), the external image data onto a projection surface of the virtual projection model; and
capturing, by the controller (160), the external image data projected onto the projection surface using a virtual imaging device (VC) to generate final image data that corresponds to a position of the selected region,
wherein the controller (160) adjusts a position of the virtual imaging device (VC) according to the state change of the vehicle (V) to capture the external image data projected corresponding to the state change of the vehicle (V),
wherein the state change of the vehicle (V) includes a gear change, a vehicle speed change, an angle change of a steering wheel, or an operation change of a door, and
wherein the plurality of regions include regions for confirming a front, a rear, a left front, a left rear, a right front, a right rear, and an upper portion of the vehicle (V) and regions for confirming the front and the rear of the vehicle (V).

7. The method of claim 6, wherein the virtual projection model includes a plane model, a spherical model, a hybrid model, a cylindrical model, a three-section model, and a variable tilting model.

8. The method of claim 7, further comprising:
generating, by the controller (160), a virtual imaging device (VC) model around the vehicle (V) when the virtual projection model is selected.

9. The method of claim 8, further comprising:
adjusting, by the controller (160), a position, an angle, a focal length, and a distortion degree of the virtual imaging device (VC) model based on the selected region or the state change of the vehicle (V) when at least one of the plurality of regions is selected from the user input or the state change of the vehicle (V) is sensed by the sensor (120).

10. The method of claim 8, further comprising:
photographing, by the controller (160), the external image data projected on the projection surface of the virtual projection model to generate the final image data.

11. A non-transitory computer readable medium containing program instructions executed by a controller (160), the computer readable medium comprising:
program instructions that receive a user input;
program instructions that receive external image data of a vehicle (V) from at least one imaging device (110, RC1-RC4);
program instructions that receive confirmation of a state of the vehicle (V) from at least one sensor (120);
program instructions that select a virtual projection model based on a selected region or the state change of the vehicle (V) when at least one of a plurality of regions is selected from the user input or the state change of the vehicle (V) is sensed by the sensor (120);
program instructions that project the external image data onto a projection surface of the virtual projection model and capture the external image data projected onto the projection surface using a virtual imaging device (VC) to generate final image data that corresponds to a position of the selected region,
wherein the controller (160) adjusts a position of the virtual imaging device (VC) according to the state change of the vehicle (V) to capture the external image data projected corresponding to the state change of the vehicle (V),
wherein the state change of the vehicle (V) includes a gear change, a vehicle speed change, an angle change of a steering wheel, or an operation change of a door, and
wherein the plurality of regions include regions for confirming a front, a rear, a left front, a left rear, a right front, a right rear, and an upper portion of the vehicle (V) and regions for confirming the front and the rear of the vehicle (V).

12. The non-transitory computer readable medium of claim 11, wherein the virtual projection model includes a plane model, a spherical model, a hybrid model, a cylindrical model, a three-section model, and a variable tilting model.

13. The non-transitory computer readable medium of claim 12, further comprising:
program instructions that generate a virtual imaging device (VC) model around the vehicle (V) when the virtual projection model is selected.

14. The non-transitory computer readable medium of claim 13, further comprising:
program instructions that adjust a position, an angle, a focal length, and a distortion degree of the virtual imaging device (VC) model based on the selected region or the state change of the vehicle (V) when at least one of the plurality of regions is selected from the user input or the state change of the vehicle (V) is sensed by the sensor (120).

15. The non-transitory computer readable medium of claim 13, further comprising:
program instructions that control the virtual imaging device (VC) model to photograph the external image data projected on the projection surface of the virtual projection model to generate the final image data.

## Patentansprüche

1. Vorrichtung (100) zum Aufnehmen eines Bildes für ein Fahrzeug (V), umfassend:
einen Eingang (130), der dafür ausgebildet ist, eine Nutzereingabe zu empfangen;
mindestens eine Bildgabevorrichtung (110, RC1-RC4), die dafür ausgebildet ist, externe Bilddaten des Fahrzeugs (V) zu erfassen;
einen Sensor (120), der mindestens einen Sensor umfasst, der dafür ausgebildet ist, einen Zustand des Fahrzeugs (V) zu bestätigen;
eine Anzeige (140), die dafür ausgebildet ist, eine Region um das Fahrzeug (V), die auf der Grundlage des Fahrzeugs (V) in mehrere Regionen unterteilt werden soll, anzuzeigen; und
eine Steuereinheit (160), die dafür ausgebildet ist, ein virtuelles Projektionsmodell auf der Grundlage einer ausgewählten Region oder der Zustandsänderung des Fahrzeugs (V) auszuwählen, wenn mindestens eine der mehreren Regionen aus der Nutzereingabe ausgewählt wird oder die Zustandsänderung des Fahrzeugs (V) durch den Sensor (120) abgefühlt wird, die externen Bilddaten auf eine Projektionsfläche des virtuellen Projektionsmodells zu projizieren, und die auf die Projektionsfläche projizierten externen Bilddaten mittels einer virtuellen Bildgabevorrichtung (VC) zu erfassen, um endgültige Bilddaten zu generieren, die einer Position der ausgewählten Region entsprechen,
wobei die Steuereinheit (160) eine Position der virtuellen Bildgabevorrichtung (VC) gemäß der Zustandsänderung des Fahrzeugs (V) einstellt, um die externen Bilddaten zu erfassen, die entsprechend der Zustandsänderung des Fahrzeugs (V) projiziert wurden,
wobei die Zustandsänderung des Fahrzeugs (V) Folgendes umfasst: einen Gangwechsel, eine Änderung der Fahrzeuggeschwindigkeit, eine Änderung des Lenkradwinkels oder eine Betriebsänderung einer Tür, und
wobei die mehreren Regionen Regionen zum Bestätigen eines vorderen, eines hinteren, eines linken vorderen, eines linken hinteren, eines rechten vorderen, eines rechten hinteren und eines oberen Abschnitts des Fahrzeugs (V) sowie Regionen zum Bestätigen des vorderen und des hinteren Teils des Fahrzeugs (V) umfassen.

2. Vorrichtung (100) nach Anspruch 1, wobei das virtuelle Projektionsmodell ein Ebenenmodell, ein sphärisches Modell, ein Hybridmodell, ein zylindrisches Modell, ein Drei-Schnitt-Modell und ein variables Neigungsmodell umfasst.

3. Vorrichtung (100) nach Anspruch 2, wobei die Steuereinheit (160) dafür ausgebildet ist, ein virtuelles Bildgabevorrichtungs (VC)-Modell um das Fahrzeug (V) herum zu generieren, wenn das virtuelle Projektionsmodell ausgewählt wird.

4. Vorrichtung (100) nach Anspruch 3, wobei die Steuereinheit (160) dafür ausgebildet ist, eine Position, einen Winkel, eine Brennweite und einen Verzerrungsgrad des virtuellen Bildgabevorrichtungs (VC)-Modells auf der Grundlage der ausgewählten Region oder der Zustandsänderung des Fahrzeugs (V) einzustellen, wenn mindestens eine der mehreren Regionen aus der Nutzereingabe ausgewählt wird oder die Zustandsänderung des Fahrzeugs (V) durch den Sensor (120) abgefühlt wird.

5. Vorrichtung (100) nach Anspruch 3, wobei das virtuelle Bildgabevorrichtungs (VC)-Modell durch die Steuereinheit (160) ausgeführt wird, um die auf das virtuelle Projektionsmodell projizierten externen Bilddaten zu fotografieren, um die endgültigen Bilddaten zu generieren.

6. Verfahren zum Aufnehmen eines Bildes für ein Fahrzeug (V), umfassend:
Empfangen, durch eine Steuereinheit (160), einer Nutzereingabe;
Empfangen, durch die Steuereinheit (160), externer Bilddaten des Fahrzeugs (V) von mindestens einer Bildgabevorrichtung (110, RC1-RC4);
Empfangen, durch die Steuereinheit (160), einer Bestätigung eines Zustands des Fahrzeugs (V) von mindestens einem Sensor (120);
Auswählen, durch die Steuereinheit (160), eines virtuellen Projektionsmodells auf der Grundlage einer ausgewählten Region oder der Zustandsänderung des Fahrzeugs (V), wenn mindestens eine von mehreren Regionen aus der Nutzereingabe ausgewählt wird oder die Zustandsänderung des Fahrzeugs (V) durch den Sensor (120) abgefühlt wird;
Projizieren, durch die Steuereinheit (160), der externen Bilddaten auf eine Projektionsfläche des virtuellen Projektionsmodells; und
Erfassen, durch die Steuereinheit (160), der auf die Projektionsfläche projizierten externen Bilddaten mittels einer virtuellen Bildgabevorrichtung (VC) zum Generieren endgültiger Bilddaten, die einer Position der ausgewählten Region entsprechen,
wobei die Steuereinheit (160) eine Position der virtuellen Bildgabevorrichtung (VC) gemäß der Zustandsänderung des Fahrzeugs (V) einstellt, um die externen Bilddaten zu erfassen, die entsprechend der Zustandsänderung des Fahrzeugs (V) projiziert wurden,
wobei die Zustandsänderung des Fahrzeugs (V) Folgendes umfasst: einen Gangwechsel, eine Änderung der Fahrzeuggeschwindigkeit, eine Änderung des Lenkradwinkels oder eine Betriebsänderung einer Tür, und
wobei die mehreren Regionen Regionen zum Bestätigen eines vorderen, eines hinteren, eines linken vorderen, eines linken hinteren, eines rechten vorderen, eines rechten hinteren und eines oberen Abschnitts des Fahrzeugs (V) und Regionen zum Bestätigen des vorderen und des hinteren Teils des Fahrzeugs (V) umfassen.

7. Verfahren nach Anspruch 6, wobei das virtuelle Projektionsmodell ein Ebenenmodell, ein sphärisches Modell, ein Hybridmodell, ein zylindrisches Modell, ein Drei-Schnitt-Modell und ein variables Neigungsmodell umfasst.

8. Verfahren nach Anspruch 7, des Weiteren umfassend:
Generieren, durch die Steuereinheit (160), eines virtuellen Bildgabevorrichtungs (VC)-Modells um das Fahrzeug (V) herum, wenn das virtuelle Projektionsmodell ausgewählt wird.

9. Verfahren nach Anspruch 8, das des Weiteren Folgendes umfasst:
Einstellen, durch die Steuereinheit (160), einer Position, eines Winkels, einer Brennweite und eines Verzerrungsgrades des virtuellen Bildgabevorrichtungs (VC)-Modells auf der Grundlage der ausgewählten Region oder der Zustandsänderung des Fahrzeugs (V), wenn mindestens eine der mehreren Regionen aus der Nutzereingabe ausgewählt wird oder die Zustandsänderung des Fahrzeugs (V) durch den Sensor (120) abgefühlt wird.

10. Verfahren nach Anspruch 8, das des Weiteren Folgendes umfasst:
Fotografieren, durch die Steuereinheit (160), der externen Bilddaten, die auf die Projektionsfläche des virtuellen Projektionsmodells projiziert wurden, um die endgültigen Bilddaten zu generieren.

11. Nicht-transitorisches computerlesbares Medium, das Programminstruktionen umfasst, die durch eine Steuereinheit (160) ausgeführt werden, wobei das computerlesbare Medium Folgendes umfasst:
Programminstruktionen, die eine Nutzereingabe empfangen; Programminstruktionen, die externe Bilddaten eines Fahrzeugs (V) von mindestens einer Bildgabevorrichtung (110, RC1-RC4) empfangen;
Programminstruktionen, die eine Bestätigung eines Zustands des Fahrzeugs (V) von mindestens einem Sensor (120) empfangen;
Programminstruktionen, die ein virtuelles Projektionsmodell auf der Grundlage einer ausgewählten Region oder der Zustandsänderung des Fahrzeugs (V) auswählen, wenn mindestens eine von mehreren Regionen aus der Nutzereingabe ausgewählt wird oder die Zustandsänderung des Fahrzeugs (V) durch den Sensor (120) abgefühlt wird;
Programminstruktionen, welche die externen Bilddaten auf eine Projektionsfläche des virtuellen Projektionsmodells projizieren und die auf die Projektionsfläche projizierten externen Bilddaten mittels einer virtuellen Bildgabevorrichtung (VC) erfassen, um endgültige Bilddaten zu generieren, die einer Position der ausgewählten Region entsprechen,
wobei die Steuereinheit (160) eine Position der virtuellen Bildgabevorrichtung (VC) gemäß der Zustandsänderung des Fahrzeugs (V) einstellt, um die externen Bilddaten zu erfassen, die entsprechend der Zustandsänderung des Fahrzeugs (V) projiziert wurden,
wobei die Zustandsänderung des Fahrzeugs (V) Folgendes umfasst: einen Gangwechsel, eine Änderung der Fahrzeuggeschwindigkeit, eine Änderung des Lenkradwinkels oder eine Betriebsänderung einer Tür, und
wobei die mehreren Regionen Regionen zum Bestätigen eines vorderen, eines hinteren, eines linken vorderen, eines linken hinteren, eines rechten vorderen, eines rechten hinteren und eines oberen Abschnitts des Fahrzeugs (V) und Regionen zum Bestätigen des vorderen und des hinteren Teils des Fahrzeugs (V) umfassen.

12. Nicht-transitorisches computerlesbares Medium nach Anspruch 11, wobei das virtuelle Projektionsmodell ein Ebenenmodell, ein sphärisches Modell, ein Hybridmodell, ein zylindrisches Modell, einen Drei-Schnitt-Modell und ein variables Neigungsmodell umfasst.

13. Nicht-transitorisches computerlesbares Medium nach Anspruch 12, des Weiteren umfassend:
Programminstruktionen, die ein virtuelles Bildgabevorrichtungs (VC)-Modell um das Fahrzeug (V) herum generieren, wenn das virtuelle Projektionsmodell ausgewählt wird.

14. Nicht-transitorisches computerlesbares Medium nach Anspruch 13, des weiteren umfassend:
Programminstruktionen, die eine Position, einen Winkel, eine Brennweite und einen Verzerrungsgrad des virtuellen Bildgabevorrichtungs (VC)-Modells auf der Grundlage der ausgewählten Region oder der Zustandsänderung des Fahrzeugs (V) einstellen, wenn mindestens eine der mehreren Regionen aus der Nutzereingabe ausgewählt wird oder die Zustandsänderung des Fahrzeugs (V) durch den Sensor (120) abgefühlt wird.

15. Nicht-transitorisches computerlesbares Medium nach Anspruch 13, des Weiteren umfassend:
Programminstruktionen, die das virtuelle Bildgabevorrichtungs (VC)-Modell steuern, um die auf die Projektionsfläche des virtuellen Projektionsmodells projizierten externen Bilddaten zu fotografieren, um die endgültigen Bilddaten zu generieren.

## Revendications

1. Appareil (100) destiné à acquérir une image de véhicule (V), comprenant :
un dispositif d'entrée (130) conçu pour recevoir une entrée d'utilisateur ;
au moins un dispositif imageur (110, RC1 à RC4) conçu pour acquérir des données d'image extérieure du véhicule (V) ;
un capteur (120) incluant au moins un capteur conçu pour vérifier un état du véhicule (V) ;
un dispositif d'affichage (140) conçu pour afficher une région autour du véhicule (V) à diviser en une pluralité de régions sur la base du véhicule (V) ; et
un dispositif de commande (160) conçu pour sélectionner un modèle de projection virtuel sur la base d'une région sélectionnée ou du changement d'état du véhicule (V), lorsqu'au moins une région de la pluralité de régions est sélectionnée à partir de l'entrée d'utilisateur ou que le changement d'état du véhicule (V) est détecté par le capteur (120), projeter les données d'image extérieure sur une surface de projection du modèle de projection virtuel, et capturer les données d'image extérieure projetées sur la surface de projection à l'aide d'un dispositif imageur virtuel (VC) pour produire des données d'image finale qui correspondent à une position de la région sélectionnée,
dans lequel le dispositif de commande (160) ajuste une position du dispositif imageur virtuel (VC) en fonction du changement d'état du véhicule (V) pour capturer les données d'image extérieure projetées correspondant au changement d'état du véhicule (V),
dans lequel le changement d'état du véhicule (V) inclut un passage de vitesse, une variation de vitesse du véhicule, une variation d'angle de volant de direction ou un changement lié à un fonctionnement de portière, et
dans lequel la pluralité de régions inclut des régions destinées à vérifier un avant, un arrière, un avant gauche, un arrière gauche, un avant droit, un arrière droit et une partie supérieure du véhicule (V), et des régions destinées à vérifier l'avant et l'arrière du véhicule (V).

2. Appareil (100) selon la revendication 1, dans lequel le modèle de projection virtuel inclut un modèle plan, un modèle sphérique, un modèle hybride, un modèle cylindrique, un modèle en trois parties et un modèle à inclinaison variable.

3. Appareil (100) selon la revendication 2, dans lequel le dispositif de commande (160) est conçu pour produire un modèle de dispositif imageur virtuel (VC) autour du véhicule (V), lorsque le modèle de projection virtuel est sélectionné.

4. Appareil (100) selon la revendication 3, dans lequel le dispositif de commande (160) est conçu pour ajuster une position, un angle, une longueur focale et un degré de distorsion du modèle du dispositif imageur virtuel (VC) sur la base de la région sélectionnée ou du changement d'état du véhicule (V), lorsqu'au moins une région de la pluralité de régions est sélectionnée à partir de l'entrée d'utilisateur ou que le changement d'état du véhicule (V) est détecté par le capteur (120).

5. Appareil (100) selon la revendication 3, dans lequel le modèle du dispositif imageur virtuel (VC) est exécuté par le dispositif de commande (160) pour photographier les données d'image extérieure projetées sur le modèle de projection virtuel afin de produire les données d'image finale.

6. Procédé pour acquérir une image de véhicule (V), comprenant les étapes suivantes :
recevoir, au moyen d'un dispositif de commande (160), une entrée d'utilisateur ;
recevoir, au moyen du dispositif de commande (160), des données d'image extérieure du véhicule (V) en provenance d'au moins un dispositif imageur (110, RC1 à RC4) ;
recevoir, au moyen du dispositif de commande (160), la vérification d'un état du véhicule (V) en provenance d'au moins un capteur (120) ;
sélectionner, au moyen du dispositif de commande (160), un modèle de projection virtuel sur la base d'une région sélectionnée ou du changement d'état du véhicule (V), lorsqu'au moins une région d'une pluralité de régions est sélectionnée à partir de l'entrée d'utilisateur ou que le changement d'état du véhicule (V) est détecté par le capteur (120) ;
projeter, au moyen du dispositif de commande (160), les données d'image extérieure sur une surface de projection du modèle de projection virtuel ; et
capturer, au moyen du dispositif de commande (160), les données d'image extérieure projetées sur la surface de projection à l'aide d'un dispositif imageur virtuel (VC) pour produire des données d'image finale qui correspondent à une position de la région sélectionnée,
dans lequel le dispositif de commande (160) ajuste une position du dispositif imageur virtuel (VC) en fonction du changement d'état du véhicule (V) pour capturer les données d'image extérieure projetées correspondant au changement d'état du véhicule (V),
dans lequel le changement d'état du véhicule (V) inclut un passage de vitesse, une variation de vitesse du véhicule, une variation d'angle de volant de direction ou un changement lié à un fonctionnement de portière, et
dans lequel la pluralité de régions inclut des régions destinées à vérifier un avant, un arrière, un avant gauche, un arrière gauche, un avant droit, un arrière droit et une partie supérieure du véhicule (V), et des régions destinées à vérifier l'avant et l'arrière du véhicule (V).

7. Procédé selon la revendication 6, dans lequel le modèle de projection virtuel inclut un modèle plan, un modèle sphérique, un modèle hybride, un modèle cylindrique, un modèle en trois parties et un modèle à inclinaison variable.

8. Procédé selon la revendication 7, comprenant en outre l'étape suivante :
produire, au moyen du dispositif de commande (160), un modèle de dispositif imageur virtuel (VC) autour du véhicule (V), lorsque le modèle de projection virtuel est sélectionné.

9. Procédé selon la revendication 8, comprenant en outre l'étape suivante :
ajuster, au moyen du dispositif de commande (160), une position, un angle, une longueur focale et un degré de distorsion du modèle du dispositif imageur virtuel (VC) sur la base de la région sélectionnée ou du changement d'état du véhicule (V), lorsqu'au moins une région de la pluralité de régions est sélectionnée à partir de l'entrée d'utilisateur ou que le changement d'état du véhicule (V) est détecté par le capteur (120).

10. Procédé selon la revendication 8, comprenant en outre l'étape suivante :
photographier, au moyen du dispositif de commande (160), les données d'image extérieure projetées sur la surface de projection du modèle de projection virtuel pour produire les données d'image finale.

11. Support non transitoire lisible par ordinateur, contenant des instructions de programme exécutées par un dispositif de commande (160), le support lisible par ordinateur comprenant :
des instructions de programme qui reçoivent une entrée d'utilisateur ;
des instructions de programme qui reçoivent des données d'image extérieure d'un véhicule (V) en provenance d'au moins un dispositif imageur (110, RC1 à RC4) ;
des instructions de programme qui reçoivent la vérification d'un état du véhicule (V) en provenance d'au moins un capteur (120) ;
des instructions de programme qui sélectionnent un modèle de projection virtuel sur la base d'une région sélectionnée ou du changement d'état du véhicule (V), lorsqu'au moins une région d'une pluralité de régions est sélectionnée à partir de l'entrée d'utilisateur ou que le changement d'état du véhicule (V) est détecté par le capteur (120) ;
des instructions de programme qui projettent les données d'image extérieure sur une surface de projection du modèle de projection virtuel et capturent les données d'image extérieure projetées sur la surface de projection à l'aide d'un dispositif imageur virtuel (VC) pour produire des données d'image finale qui correspondent à une position de la région sélectionnée,
dans lequel le dispositif de commande (160) ajuste une position du dispositif imageur virtuel (VC) en fonction du changement d'état du véhicule (V) pour capturer les données d'image extérieure projetées correspondant au changement d'état du véhicule (V),
dans lequel le changement d'état du véhicule (V) inclut un passage de vitesse, une variation de vitesse du véhicule, une variation d'angle de volant de direction ou un changement lié à un fonctionnement de portière, et
dans lequel la pluralité de régions inclut des régions destinées à vérifier un avant, un arrière, un avant gauche, un arrière gauche, un avant droit, un arrière droit et une partie supérieure du véhicule (V), et des régions destinées à vérifier l'avant et l'arrière du véhicule (V).

12. Support non transitoire lisible par ordinateur, selon la revendication 11, dans lequel le modèle de projection virtuel inclut un modèle plan, un modèle sphérique, un modèle hybride, un modèle cylindrique, un modèle en trois parties et un modèle à inclinaison variable.

13. Support non transitoire lisible par ordinateur, selon la revendication 12, comprenant en outre :
des instructions de programme qui produisent un modèle de dispositif imageur virtuel (VC) autour du véhicule (V), lorsque le modèle de projection virtuel est sélectionné.

14. Support non transitoire lisible par ordinateur, selon la revendication 13, comprenant en outre :
des instructions de programme qui ajustent une position, un angle, une longueur focale et un degré de distorsion du modèle du dispositif imageur virtuel (VC) sur la base de la région sélectionnée ou du changement d'état du véhicule (V), lorsqu'au moins une région de la pluralité de régions est sélectionnée à partir de l'entrée d'utilisateur ou que le changement d'état du véhicule (V) est détecté par le capteur (120).

15. Support non transitoire lisible par ordinateur, selon la revendication 13, comprenant en outre :
des instructions de programme qui commandent le dispositif imageur virtuel (VC) pour qu'il photographie les données d'image extérieure projetées sur la surface de projection du modèle de projection virtuel afin de produire les données d'image finale.
